# EUROPEAN PATENT APPLICATION

(11) **EP 2 249 312 A1**
(43) Date of publication of application: **10.11.2010**
(21) Application number: 09305406.2
(22) Date of filing: 06.05.2009
(51) Int. Cl.: G06T 15/40, G06T 15/20

(54) **Layered-depth generation of images for 3D multiview display devices**

(71) Applicant: Thomson Licensing, 92130 Issy-les-Moulineaux (FR)
(72) Inventor: Marvie, Jean-Eudes, 92648 Boulogne Cedex (FR); Gautron, Pascal, 92648 Boulogne Cedex (FR); Trivis, Emmanuël, 92648 Boulogne Cedex (FR)
(74) Representative: Ruellan-Lemonnier, Brigitte

(57) **Abstract**

An object of the invention is to propose a method of automatic generation of the two images that are required for a layer depth format from the classical data representing a tri-dimensional virtual scene. According to the invention, a first scan of a classical z-buffer algorithm allows to generate the first image including the foreground, and, a second scan of an adapted z-buffer algorithm with two successive selections for depth-peeling allows to generate the second image discarding the foreground.

These two images can be advantageously used to generate multiviews as required for instance by multiview display devices.

## Description

### Technical Field :

The invention relates to the representation of a synthetic 3D-scene by a central view from a main view point and its depth map, that allow to compute other views of the same 3D-scene from other view points.

### Background Art

A first background art related to the invention concerns the field of computer graphics or computer-generated imagery systems that are adapted to display realistic, three-dimensional scenes on a video display panel. Such computer graphics systems are especially adapted for any of several different applications including, but not limited to, video games, mixed reality movies, flight simulation techniques, computer aided design, architectural planning, and mathematical modeling. As will be known to those skilled in the art, conventional computer-generated imagery or graphics systems are capable of displaying multiview images of three-dimensional scenes comprising a plurality of three dimensional objects, which objects are typically defined by a plurality of mathematical elements, such as elementary polygons, surface patches, and other higher order surfaces.

Computer graphics display systems typically derive images from digital data stored in the form of points in a three-dimensional coordinate system, wherein the points correspond for instance to the vertices of elementary polygons. The polygons form the "building blocks" of larger objects which are the ultimate displayed objects of the virtual scene.

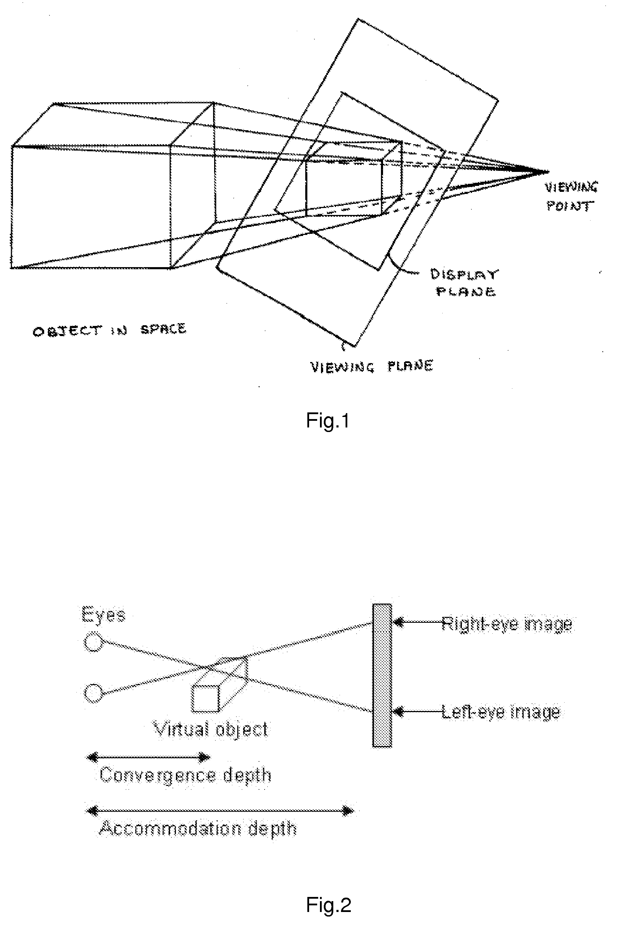

Viewing this set of polygons is achieved by projecting the vertices onto a image plane as illustrated on figure 1 (viewing plane on figure 1). Such a projection depends on the position and properties of a viewpoint (viewing point on figure 1). The polygons are then rasterized: a "fragment" is generated for each pixel, forming a 2-D image of a view of the 3-D scene from the given view point. Each fragment is assigned with a color information (as, for instance, luminance and chrominance) and with a depth information representing the distance from the point visible through the fragment to the viewpoint.

For a film camera, the amount of a scene projected onto the film plane is limited by the aperture of the lenses. Here, similarly, only the points whose projection falls in this area of the view plane are taken into consideration and will be actually displayed.

In summary, the data related to each point on the view plane includes :
- positional data in a three-dimensional coordinate system in which, for example, the X and Y axes define the view plane and the Z axis represents depth (i.e. distance) from the view plane ,
- color data related to this point.

Positional data related to the X and Y axes is represented implicitly by the coordinates of the point within the 2D image. The color data is stored in a color buffer, and depth data related to the Z axis is stored in a depth buffer (or "Z-buffer") arranged as a two-dimensional array (x-y) with one element for each pixel.

Then, to display a realistic three-dimensional scene on the view plane, i.e. on the video display panel, it is essential to identify the points of the scene which are located closest to the view point. In a realistic setting, certain objects may be either totally or partially obstructed by forward-lying other objects. In order for three-dimensional objects in a scene to be projected on a two-dimensional video display panel representing a view plane, a computer graphics system have means by which to distinguish the relative depth of the objects, so as not to display any object or portion thereof which would be hidden when observed from the viewpoint. Accordingly, the visible surfaces of a scene which are located in closest proximity to the viewpoint must be identified in order to display only those visible surfaces on the video display panel.

To remove hidden points, a standard depth buffer technique is often used in which the Z values of each projected point, i.e. pixel, are determined and compared. For any given point on the view plane having a corresponding storage location in the depth buffer and the frame buffer of the system, the point chosen for display will be that which is closest to the viewpoint. This prior art technique is generally described in "Fundamentals of Interactive Computer Graphics" by Foley and Van Dam, Addison-Wesley Publishing Company, Inc. (1982) at pages 560-61. If two points of the scene are projected in the same pixel of the video display panel, the depths of the two points are compared and only the one closer to the view plane is chosen, the farther one being discarded. This discarding is called "depth-culling" or "z-culling". The chosen depth is then saved to the z-buffer, replacing the old one. This is called "depth-buffering" or "z-buffering". In the end, the depth buffer (or "z-buffer") will allow to correctly reproduce the usual depth perception according to which a close object hides a farther one.

A depth-buffer algorithm developed by E. Catmull, disclosed in an article entitled "A Subdivision Algorithm for Computer Display of Curved Surfaces" and published in Ph.D.-Thesis, Computer Science Department, University of Utah, in December 1974, is commonly implemented in most kinds of 3D graphics hardware accelerators. It requires a frame buffer in which colour values are stored and a depth buffer with the same number of entries, in which a depth value (Z-Value) is stored for each pixel of the image to display. The depth buffer is initialized to infinity, representing the depth value at the back clipping plane and the frame buffer is initialized to a given background colour. The lowest value that can be stored in the depth buffer represents the depth value of the front clipping plane. The advantage of this algorithm is that points which belong to any object, independent of their depth, can be rendered in arbitrary order. During the scan conversion process, if the point being scan converted at (X, Y) is no farther from the viewer then is the point whose colour value and depth value are currently in the frame buffer and the depth buffer, respectively, then the new points colour value and depth value replace the old values.

The above described method of generating in the form of an array of picture elements (pixels) a two-dimensional image representing a three-dimensional scene is described for example in US4475104. That method implements a so-called "depth buffer" or "Z-Buffer" hidden surface removal (HSR) at the time of scan conversion to ensure that the image of an object in the scene which has already been converted is not overwritten by input pixel data which arrives later but in fact corresponds to an object behind the one already stored. In the depth-buffer algorithm the stored foreground colour is only overwritten if the input depth is less than the stored foreground depth. The input depth is then stored as a new foreground depth.

The depth-buffer algorithm (or Z-buffering method) is also described more generally in "Principles of Interactive Computer Graphics" by W.M. Newman and R.F. Sproull, McGraw-Hill Publishing Co., Second Ed., 1979, chapt. 24, "Hidden Surface Elimination", on page 369 et seq., and has the advantage of simplicity and of not requiring knowledge of any object other than that being scan-converted at the time. The depth-buffer algorithm is one solution to the visibility problem, which is the problem of deciding which elements of a rendered scene are visible, and which are hidden. The so-called "painter's algorithm" is another common solution which, though less efficient, can also handle non-opaque scene elements.

A second background art related to the invention concerns the field of autostereoscopic multiview layer-depth video display devices.

The term "multiview" means that the viewer is allowed to watch different images of the same 3D-scene projected on a same video display panel from different view points, i.e. to watch different images of the same 3D-scene under different angles of view.

The term "stereoscopic" means that two adjacent views, among the multiviews, are offered to each eye of the viewer in order to create an illusion of depth by the convergence of the eyes before the video display panel for the foreground objects of the scene, as illustrated on figure 2.

The term "autostereoscopic" means that the display device is adapted to avoid the viewer to wear special devices like glasses or gear to get the stereoscopic effect.

Note that thorough descriptions of the display technology and of related video data encoding can be found notably in the following documents :
- the article entitled "Resampling radially captured images for perspectively correct stereoscpic display", authored by N.A Dodgson, in Proc SPIE, 3295, p100-110, 1998;
- the article entitled "Autostereoscopic 3D Displays", authored by N.A Dodgson, in IEEE Computer Society, p 31-36, 2005;
- the article entitled "Multiview Autostereoscopic Displays", authored by B. Mercier, K. Boulanger, C. Bouville, K. Bouatouch, INRIA Rennes-Bretagne Atlantique, PI 1868, 2007.

The term "layer-depth" means that the scene to multiview display is transmitted to the video display device using a specific format requiring, for each 3D-scene to display:
- a central whole view of the scene, with information related to the depth (or disparity) of each visible point of this central view, as, for instance, a depth (or disparity) map of this central view;
- a central view of the scene that is peeled from the foreground, i.e. a central background view of the scene, with information related to the depth (or disparity) of each visible point of this central view, as, for instance, a depth (or disparity) map of this central view.

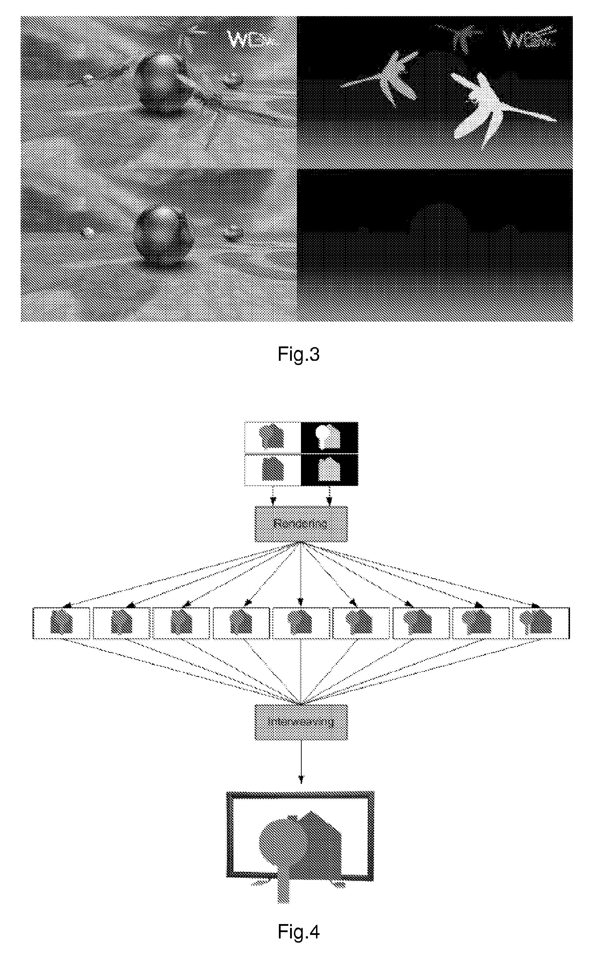

Such a representation of a scene is illustrated on figure 3 (central whole view at top, central background view at bottom), wherein each depth map (right side on figure 3) is represented by a black-and-white image, wherein the grey level is proportional to the depth. The light objects in the image of this map are close to the view point, and far objects are displayed in darker grey. Such a representation of a scene is notably illustrated by the WOWvx format developed by PHILIPS, as illustrated in the document "3D Interface Specifications - Philips 3D solutions", published on Feb. 15, 2008. These types of format are called "Layer-Depth" formats (LDV), allow the computation of the different views from different view points that may be required by the multiview video display device to display a scene, and allow the transmission of the video data under lower bandwidth.

Such autostereoscopic multiview layer-depth video display devices automatically generate the plurality of the different views to display based on the video data transmitted under this layer-depth format, as the WOWvx format. For instance, as illustrated on figure 4, from the central whole view and the central background view of the scene with their respective depth map, the PHILIPS autostereoscopic display devices generates nine different views under nine different view points.

Due to the well known parallax effect, the change of the view points allows the viewer to see objects or zones of objects that are occluded in the central image. In the central image of figure 4, the house chimney cannot be seen as it is masked by the tree. However, after generating the multiple views, in some views, the chimney can be seen behind the tree. If only a single view with its disparity map are used as inputs, there would be no information regarding this occluded chimney, and holes would appear in the generated views. To prevent from creating holes as a replacement for the masked zones in the central image, the display uses data contained in the background images. Therefore, in order to generate the multiple views with no holes, the missing data in the central whole image have to be included in the central background image.

The invention concerns more specifically a method of generation of the two images that are required for a layer depth format from the classical data representing a tri-dimensionnal scene. As already mentioned above, these classical data are for instance stored in the form of points, each point representing for instance the vertices of elementary polygons, the tessalating of these polygons forming the different objects of the scene to display. A specific color content is associated to each point.

If the scene to display is not complex, i.e. it does not contain too many objects, the scene may be easily subdivided into 'foreground' objects and 'background' objects. In this case, the central background image of the scene is generated using only 'background' objects. However, in more complex scenes, such subdivision cannot be performed. The invention addresses the problem of robust background image generation depending on the current view point.

In the context of real imaging, the classical method for generating background and foreground images is very simple. The background is first captured alone. Then, the foreground, including characters, moving objects, etc... is shot. Using those two sets of images, the foreground can be isolated while keeping the information about the underlying background. An other solution consists in adding virtual objects in front of a filmed background. In this case the separation is very simple. The separation can also be performed on a single set of images. In this case, the artist decides which objects are in the foreground, and manually separates the corresponding pixels. Then the artist (or a hole-filling algorithm) fills the holes generated by the separation.

In the context of computer graphics or computer-generated imagery, no automatic solution exists.

### Summary of invention :

The object of the invention is to propose a method of automatic generation of the two images that are required for a layer depth format from the classical data representing a tri-dimensionnal scene, said automatic generation being based on a depth-peeling algorithm, as illustrated for instance at chapter 15 entitled "Blueprint rendering and "Sketchy drawings", authored by M. Nienhaus, J. Döllner, in the book entitled "GPU Gems 2", Addison Wesley Ed., 2005.

The invention addresses the problem of automatic generation of layered-depth images of synthetic scenes using graphics hardware, when such images more specifically consists of two layers with their associated per-pixel depth information. In such synthetic scenes, contrary to real scenes, the entire scene is known, and hence all the required information is present. However, as explained above, the image generation process relies classically on the depth-buffer algorithm, which, for each pixel, stores the distance to the closest object of the scene. Therefore, at the end of the rendering process, the only available information corresponds to the closest objects. Therefore, information concerning the background objects that get occluded by foreground objects, cannot be obtained any more for the computation of other views, and hence the autostereoscopic display cannot reconstructs the other views without holes. The invention solves this problem using only an additional rendering pass of the depth-buffer algorithm.

More precisely, a subject of the invention is a method of representation of a synthetic 3D-scene by its projection on a view plane from a main view point, wherein said view plane is partitioned into a network of pixels, comprising the steps of :
- composing said synthetic scene with a plurality of objects, wherein each object is represented by a series of 3D-object points delimiting at least a visible portion of its surface, each point being assigned with a colour content,
- projecting each of said 3D-object points on said view plane into a corresponding 2D-object point, and assigning each 2D-object point with its position (x, y) on said view plane and the distance (z) between the corresponding 3D-object point and said main view point, and assigning each 2D-object point with the colour content of the corresponding 3D-object point,
- assigning, i.e. rasterizing, each 2D-object point to a pixel of said view plane having the same position (x, y) on said view plane,
- first scanning pixels of said view plane that are assigned with a plurality of 2D-object points, in order to select, for each pixel under scan, the assigned 2D-object point with the lowest distance (z) and to discard all other assigned 2D-object points,
- generating a main whole image by assigning to each pixel the colour value of the corresponding 2D-object point that has been selected during the first scan,
- generating a main whole depth map of said main whole image by assigning to each pixel of said depth map the distance value (z) of the corresponding 2D-object point that has been selected during the first scan,
   wherein said method also comprises the step of:
- second scanning pixels of said view plane that are assigned with a plurality of 2D-object points, in order to, for each pixel under scan,
   => first select the assigned 2D-object point(s) with a distance (z) above a predetermined foreground depth and to discard all other assigned 2D-object points, then
   => second select, among the 2D-object point(s) of the first selection, the 2D-object point with the lowest distance (z) and to discard, if any, all other assigned 2D-object points,
- generating a main peeled image by assigning to each pixel the colour value of its only-one assigned 2D-object point,
- generating a main peeled depth map of said main peeled image by assigning to each pixel of said depth map the distance value (z) of its only-one assigned 2D-object point.

Generally, it is not necessary to delimit the whole surface of each object of the scene, as most of the objects will be viewed by the viewers under a limited range of angle of view. That is why the collection of 3D-object points that are necessary to describe the surface of each object may be limited to the visible portion of its surface.

The first scan above corresponds to a usual z-buffering operation.

The first selection of the second scan correspond to a depth peeling operation adapted to discard the foreground of the scene, i.e. to discard all objects of the scene having a depth inferior or equal to the predetermined foreground depth.

Preferably, said second scan and said generation of main peeled image use a z-buffer algorithm.

The representation of a scene according to the invention is notably illustrated by the WOWvx format, previously described. The main advantage of the method of the invention is to be entirely automatic and simple to implement.

Another subject of the invention is a method of generation of a plurality of 2D-images representing a same synthetic 3D-scene projected on a same view plane from different view points comprising a main view point, comprising the steps of :
- representing said synthetic 3D-scene by its projection on said view plane from said main view point according to the method of representation according to the invention,
- computing said plurality of 2D-images from the main whole image, the main whole depth map, the main background image and the main background depth map obtained from said representation.

Such a plurality of 2D-images representing a same synthetic 3D-scene from different view points are generally called "multiviews".

Such a computation is known per se and is used for instance in autostereoscopic multiview layer-depth video display devices.

Still another subject of the invention is method of displaying a synthetic 3D-scene on a image display panel forming a view plane, said image display panel being adapted to display a plurality of 2D-images representing a same synthetic 3D-scene from different view points, comprising the steps of:
- generating, according to the method of the invention, a plurality of 2D-images representing said synthetic 3D-scene projected on said view plane from said different view points,
- displaying said generated plurality of 2D-images on said image display panel. Autostereoscopic multiview layer-depth video display devices are preferably used for this purpose.

### Brief description of drawings :

The invention will be more clearly understood on reading the description which follows, given by way of non-limiting example and with reference to the appended figures in which:
- figure 1 illustrates the basic principle of imaging a 3D-scene viewed from a viewing point by projection of a 3D-object on a viewing plane ;
- figure 2 illustrates the basic principle of creating a stereoscopic effect by controlling the convergence depth of the eyes looking at foreground objects of a scene displayed on a video display panel ;
- figure 3 shows the representation of a synthetic 3D-scene by a central whole view at top left with its depth map at top right, and by a central background view at bottom left with its depth map at bottom right;
- figure 4 illustrates the generation of nine different views of the same synthetic 3D-scene viewed under nine different viewpoints from a representation as shown on figure 3;
- figure 5 illustrates a classical z-buffer algorithm as applied in the first scanning of pixels in the method of representation of a synthetic 3D-scene according to the invention;
- figure 6 illustrates a z-buffer algorithm as applied in the second scanning of pixels in the method of representation of a synthetic 3D-scene according to the invention.

### Description of embodiments :

The present description illustrates the present principles. It will thus be appreciated that those skilled in the art will be able to devise various arrangements that, although not explicitly described or shown herein, embody the present principles and are included within its spirit and scope.

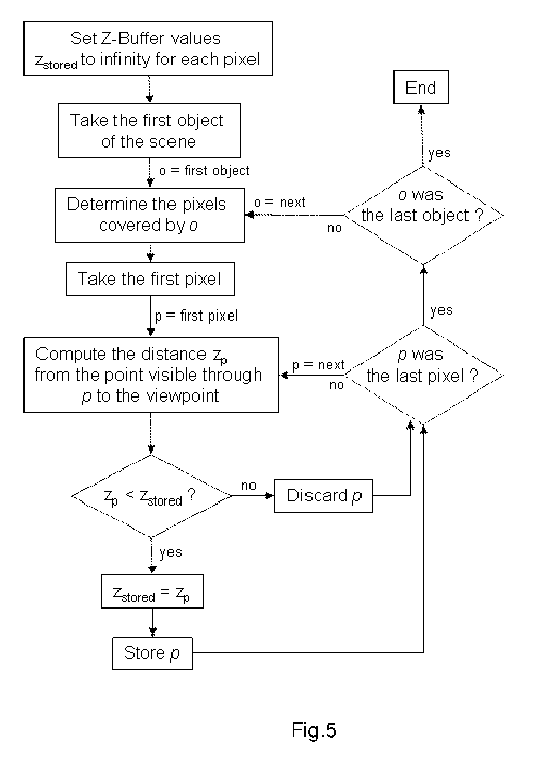

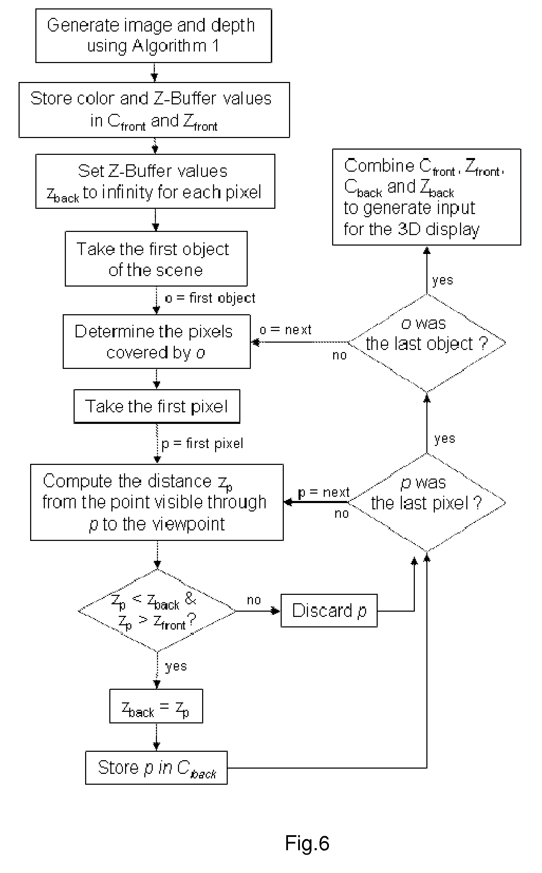

It will be appreciated that the diagrams of figures 5 and 6 may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software.

A method of representation of a synthetic 3D-scene according to the invention will now be described. A main view point and a view plane are defined for this representation. The main view plane corresponds to a video display panel or to a display projection screen. The main view point corresponds for instance to a central place for the viewer placed behind the video display panel or behind the display projection screen.

In the first step of the method of representation of a synthetic 3D-scene, a synthetic scene is composed in a method known per se, with a plurality of predefined objects. In the 3D-space, each object is represented by a series of 3D-object points delimiting at least a visible portion of its surface. Such a visible surface encompasses all views of this object from different viewpoints around the main viewpoint. The 3D-object points correspond for instance to the vertices of elementary polygons. The polygons form the "building blocks" of the objects. Each 3D-object point is assigned with a colour content, according to the choice of the colorist and to any shading or other special effect.

In the second step of the method of representation of a synthetic 3D-scene, each of the 3D-object points is projected in a manner known per se on the view plane into a corresponding 2D-object point. When the objects are represented by sets of elementary polygons, viewing an object is achieved by projecting the vertices of its elementary polygons onto the view plane as illustrated on figure 1. Each 2D-object point that is obtained by this projection is assigned with its position (x, y) on the view plane and the distance (z) between the corresponding 3D-object point and the main view point. Data related to this information are stored in the so-called "depth buffer" or "Z-buffer)).Each 2D-object point that is obtained by this projection is also assigned with the colour content of the corresponding 3D-object point. Data related to this colour content are stored in the so-called "frame buffer").

In the third step of the method of representation of a synthetic 3D-scene, the network of projected 2D-object points that is obtained is rasterized in a manner known per se. For this purpose, each projected 2D-object point that is obtained is assigned to a pixel having the same position (x, y) on this view plane. Therefore, each pixel of the view plane may be assigned with a plurality of projected 2D-object points, notably when several objects are superimposed in the synthetic 3D-scene when they are viewed from the main view point.

In the fourth step of the method of representation of a synthetic 3D-scene, the 2D-object points are z-buffered in a first scan in a manner known per se, using the z-buffer algorithm which is described on figure 5. When using this z-buffer algorithm, pixels of the view plane that are obtained at the third step and, notably those that are assigned with a plurality of 2D-object points, are first scanned in order to select, for each pixel under scan, the assigned 2D-object point with the lowest distance (z). All other assigned 2D-object points, with a higher distances, are discarded (the so-called "z-culling").

In the fifth step of the method of representation of a synthetic 3D-scene, a main whole image is then generated by assigning to each pixel the colour value of the corresponding assigned 2D-object point that has been selected during the first scan of the fourth step, and a main whole depth map of said main whole image is generated by assigning to each pixel of said depth map the distance value (z) of the corresponding assigned 2D-object point that has been selected during the first scan of the fourth step.

As a whole, during theses first to fifth steps, given a virtual camera i.e. a given view point, the scene is rendered by using the classical Z-Buffer algorithm. The resulting image and distance information as texture objects are stored for instance within a graphics memory for rendering.

In the sixth step of the method of representation of a synthetic 3D-scene, the 2D-object points are again z-buffered in a second scan as detailed below, using the z-buffer algorithm which is described on figure 6. When using this z-buffer algorithm, pixels of the view plane that are obtained at the third step and, notably those that are assigned with a plurality of 2D-object points, are second scanned in order to first select, for each pixel under scan, the assigned 2D-object point(s) with a_distance (z) above a predetermined foreground depth, all other assigned 2D-object points with shorter distance being discarded, then in order to second select, among the 2D-object points of the first selection, the 2D-object point with the lowest distance (z), all other assigned 2D-object points of the first selection, if any, being discarded.

In the seventh step of the method of representation of a synthetic 3D-scene, a main background image is then generated by assigning to each pixel the colour value of the corresponding assigned 2D-object point that has been selected during the second scan of the sixth step, and a main background depth map of said main whole image is generated by assigning to each pixel of said depth map the distance value (z) of the corresponding assigned 2D-object point that has been selected during the second scan of the sixth step.

The main whole image, the main whole depth map, the main background image and the main background depth map that are obtained represents the synthetic 3D-scene as composed in the first step. Such a representation is illustrated on figure 3.

As a whole, during theses sixth to seventh steps, the scene is rendered once more : however, instead of keeping the closest object for each pixel, we also look up the values stored in the previous Z-Buffer: using the values of the current and previous Z-Buffers, we only keep the closest objects beyond the value of the previous Z-Buffer. That is, we peel the scene to obtain the 'second layer' of visible objects. The resulting image and Z-Buffer is then also stored into graphics memory for further rendering. In the final step, we combine the two layers of images and their associated Z-Buffer to generate a layered-depth image suitable for a 3D display of the synthetic 3D-scene.

Such a method of representation of a synthetic 3D-scene is a robust method for automatically separating background and foreground objects in the context of generation of 3D input for autostereoscopic displays. Contrary to the most commonly used methods which require either a specific capture process or heavy user interaction, this separation is advantageously performed automatically and prevents the apparition of holes while enhancing the 3D effect due to the parallax. Furthermore, the z-buffer algorithms of figure 5 and 6 can be advantageously carried out in realtime using commodity graphics hardware.

From the main whole image, the main whole depth map, the main background image and the main background depth map that represents the synthetic 3D-scene, a plurality of 2D-images ("multiview") representing this synthetic 3D-scene projected on a same view plane but from different view points can be easily generated, notably by computing in a manner known per se this plurality of 2D-images from the main whole image, the main whole depth map, the main background image and the main background depth map. Such a generation is illustrated on figure 4.

Advantageously, these plurality of 2D-images are displayed in a manner known per se on an autostereoscopic multiview layer-depth video display device in order to display the synthetic 3D-scene. Therefore, the invention is advantageously integrated within a virtual reality framework. Therefore, the invention leverages the programmability of graphics hardware to generate input for 3D displays in real-time.

Most preferably, the invention is implemented with a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent methods depicted in the accompanying drawings are preferably implemented in software, the actual connections between the process function blocks may differ depending upon the manner in which the present principles are programmed. Given the teachings herein, one of ordinary skill in the pertinent art will be able to contemplate these and similar implementations or configurations of the present principles.

While the present invention is described with respect to a particular and preferred embodiment, it is understood that the present invention is not limited to this embodiment. The present invention as claimed therefore includes variations from this embodiment described herein, as will be apparent to one of skill in the art. While some of the specific embodiments may be described and claimed separately, it is understood that the various features of embodiments described and claimed herein may be used in combination.

## Claims

1. Method of representation of a synthetic 3D-scene by its projection on a view plane from a main view point, wherein said view plane is partitioned into a network of pixels, comprising the steps of :
- composing said synthetic scene with a plurality of objects, wherein each object is represented by a series of 3D-object points delimiting at least a visible portion of its surface, each point being assigned with a colour content,
- projecting each of said 3D-object points on said view plane into a corresponding 2D-object point, and assigning each 2D-object point with its position (x, y) on said view plane and the distance (z) between the corresponding 3D-object point and said main view point, and with the colour content of the corresponding 3D-object point,
- assigning each 2D-object point to a pixel of said view plane having the same position (x, y) on said view plane,
- first scanning pixels of said view plane that are assigned with a plurality of 2D-object points, in order to select, for each pixel under scan, the assigned 2D-object point with the lowest distance (z) and to discard all other assigned 2D-object points,
- generating a main whole image by assigning to each pixel the colour value of the corresponding 2D-object point that has been selected during the first scan,
- generating a main whole depth map of said main whole image by assigning to each pixel of said depth map the distance value (z) of the corresponding 2D-object point that has been selected during the first scan,
**characterized in that** said method also comprises the step of:
- second scanning pixels of said view plane that are assigned with a plurality of 2D-object points, in order to, for each pixel under scan,
=> first select the assigned 2D-object point(s) with a distance (z) above a predetermined foreground depth and to discard all other assigned 2D-object points, then
=> second select, among the 2D-object point(s) of the first selection, the 2D-object point with the lowest distance (z) and to discard, if any, all other assigned 2D-object points,
- generating a main peeled image by assigning to each pixel the colour value of its only-one assigned 2D-object point,
- generating a main peeled depth map of said main peeled image by assigning to each pixel of said depth map the distance value (z) of its only-one assigned 2D-object point.

2. Method of representation according to claim 1, wherein said second scan and said generation of main peeled image use a z-buffer algorithm.

3. Method of generation of a plurality of 2D-images representing a same synthetic 3D-scene projected on a same view plane from different view points comprising a main view point, comprising the steps of :
- representing said synthetic 3D-scene by its projection on said view plane from said main view point according to the method of representation according to any one of claims 1 to 2,
- computing said plurality of 2D-images from the main whole image, the main whole depth map, the main background image and the main background depth map obtained from said representation.

4. Method of displaying a synthetic 3D-scene on a image display panel forming a view plane, said image display panel being adapted to display a plurality of 2D-images representing a same synthetic 3D-scene from different view points, comprising the steps of:
- generating, according to claim 3, a plurality of 2D-images representing said synthetic 3D-scene projected on said view plane from said different view points,
- displaying said generated plurality of 2D-images on said image display panel.
